# EUROPÄISCHE PATENTSCHRIFT

(11) **EP 2 656 741 B1**
(45) Veröffentlichungstag und Bekanntmachung des Hinweises auf die Patenterteilung: **28.10.2020**
(21) Anmeldenummer: 13163560.9
(22) Anmeldetag: 12.04.2013
(51) Int. Cl.: A23L 3/375, F25D 3/12

(54) **Verfahren und Vorrichtung zum Kühlen von Produkten**
Method and device for cooling products
Procédé et dispositif destinés au refroidissement de produits

(30) Priorität: 27.04.2012 DE 102012008592
(43) Veröffentlichungstag der Anmeldung: 30.10.2013
(73) Patentinhaber: Messer France S.A.S., 92816 Puteaux Cedex (FR); Messer Group GmbH, 65812 Bad Soden (DE)
(72) Erfinder: Gockel, Frank, 42553 Velbert (DE); Tebib, Emir, 60330 Le Plessis Belleville (FR)
(74) Vertreter: Münzel, Joachim R.

(56) Entgegenhaltungen:
- DE-U- 7 439 472
- FR-A1- 2 953 370
- US-A1- 2010 293 969

## Beschreibung

Die Erfindung betrifft ein Verfahren zum Kühlen von Produkten, bei dem unter Druck herangeführtes flüssiges Kohlendioxid an einer Kohlendioxid-Entspannungsdüse zu Kohlendioxidgas und Kohledioxidschnee entspannt wird und der Kohlendioxidschnee zum Kühlen eines Produkts eingesetzt wird. Die Erfindung betrifft des Weiteren eine entsprechende Vorrichtung.

Bei üblichen Einrichtungen zum Erzeugen von Trockeneisteilchen wird flüssiges Kohlendioxid unter einem Druck von 5,18 bar abs. und einer der Umgebungstemperatur entsprechenden Temperatur herangeführt und an einer Düse, der sogenannten Entspannungsdüse, entspannt. Bei der Entspannung auf Atmosphärendruck kühlt sich das Kohlendioxid auf eine Temperatur von -78,9°C (194 K) ab, wobei ein Gemisch aus Kohlendioxidschnee und kaltem Kohlendioxidgas entsteht. Zumindest die Kohlendioxidpartikel werden anschließend zum Kühlen von Produkten eingesetzt und beispielsweise auf die Oberfläche eines zu kühlenden Produkts aufgetragen.

Aufgrund seiner Ungiftigkeit, seiner inerten Eigenschaften und des Umstands, dass es bei Erwärmung rückstandsfrei sublimiert, eignet sich Kohlendioxidschnee insbesondere zum Kühlen von Lebensmittelprodukten. Typische Anwendungen sind beispielsweise:
- Krustieren: Hier wird ein Lebensmittelprodukt nur an der Oberfläche abgekühlt, um beispielsweise eine mechanische Stabilität des Produkts bei einer mechanischen Behandlung, beispielsweise beim Zerteilen oder Schneiden des Produkts zu gewährleisten. Dazu wird Kohlendioxidschnee mittels Schneehörner, die oberhalb des zu kühlenden Produkts angeordnet sind, auf die Oberfläche des Lebensmittelprodukts aufgetragen.
- Kryogene Kühltunnel: Hierbei sind mehrere Entspannungsdüsen für Kohlendioxid in Laufrichtung des Produkts hintereinander angeordnet aus denen ein Gemisch aus Kohlendioxidschnee und Kohlendioxidgas in den Innenraum des Tunnels eingesprüht wird. Ventilatoren innerhalb des Tunnels sorgen dabei für eine möglichst gleichmäßige Verteilung des Kohlendioxidschnees innerhalb des Tunnels.
- Mischerkühlung: Hierbei wird das flüssige oder feste Kühlmedium (flüssiger Stickstoff oder Kohlendioxidpartikel) mittels Injektionsdüsen oder einer anderen Zuführung in einen das Produkt enthaltenden Behälter eingebracht.

Die FR2953370 betrifft ein Verfahren sowie eine Einrichtung zum Kühlen bzw. Einfrieren von Produkten, insbesondere Lebensmitteln, mit Hilfe zweier kryogener Medien. In der DE7439472U wurde die Erzeugung und Verteilung von Kohlendioxidschnee für die Kühlung von Produkten, sowie eine Vorrichtung dazu, vorgeschlagen.

Die Kühlung mit Kohlendioxid in Form fester Partikel (Kohlendioxidschnee oder Trockeneispellets) ermöglicht eine sehr effektive Fest- Fest Übertragung der Wärme vom Produkt auf das Kühlmedium. Allerdings ist die Kühlrate des Kohlendioxidschnees aufgrund der Temperatur von ca. minus 78,9°C (194 K) begrenzt. Weiterhin ist bei der Entspannung von flüssigem Kohlendioxid, bei dem das flüssige Kohlendioxid in gasförmiges Kohlendioxid und Kohlendioxidschnee übergeht, der Anteil an erzeugtem Kohlendioxidschnee umso höher, je kälter das flüssige Kohlendioxid vor der Entspannung war. Insbesondere bei der Erzeugung von Trockeneispellets wird daher versucht, die Ausbeute an Kohlendioxidschnee dadurch zu erhöhen, dass das flüssige Kohlendioxid vor der Entspannung gekühlt wird.

Da sich der bei der Entspannung von flüssigem Kohlendioxid erzeugte Kohlendioxidschnee bei Wärmeeintrag d.h. im Energieaustausch mit einem wärmeren Produkt entlang der Sublimationskurve bewegt, sublimiert ein Teil des festen Kohlendioxids bereits unmittelbar nach dem Auftragen auf ein zu kühlendes Produkt. Das dabei entstehende gasförmige Kohlendioxid kann, ähnlich dem von siedenden Flüssigkeiten her bekannten Leidenfrost-Effekt, ein Gaspolster zwischen Kohlendioxidschnee und Produkt bilden und dadurch die Effektivität der Kühlung mindern.

Um den vorgenannten Nachteilen der Kühlung mit Kohlendioxidschnee zu begegnen wurden in der EP 1 887 296 A2 sowie der US 2010/00474224 A1 vorgeschlagen, als Kühlmedium eine Suspension aus flüssigem Stickstoff und Trockeneisteilchen einzusetzen. Beim Kühlvorgang wird Wärme vom Produkt auf die Trockeneisteilchen übertragen, die zuvor in der Suspension auf die tiefe Temperatur des flüssigen Stickstoffs (77 K) gebracht wurden. Nachteilig dabei ist, dass eine derartige Suspension nur schwer zur verdüsen ist und daher für viele Kühlanwendungen als Kühlmedium nicht in Betracht kommt.

Der Erfindung liegt daher die Aufgabe zu Grunde, ein Verfahren und eine Vorrichtung zum Kühlen von Produkten zu schaffen, bei dem bzw. bei der die Probleme, die bei flüssigen kryogenen Kühlmedien auftreten, überwunden werden und gleichzeitig die Effizienz der Kühlung gegenüber den aus dem Stand der Technik bekannten Verfahren erhöht werden kann.

Gelöst ist diese Aufgabe durch ein Verfahren mit Merkmalen des Patentanspruchs 1 sowie durch eine Vorrichtung mit den Merkmalen des Patentanspruchs 5.

Das erfindungsgemäße Verfahren zum Kühlen von Produkten, bei dem unter Druck herangeführtes flüssiges Kohlendioxid an einer Kohlendioxid-Entspannungsdüse zu Kohlendioxidgas und Kohledioxidschnee entspannt und der Kohlendioxidschnee zum Kühlen eines Produkts eingesetzt wird, ist also dadurch gekennzeichnet, dass der aus der Kohlendioxid-Entspannungsdüse austretende Strom aus Kohlendioxidschnee und Kohlendioxidgas in einer Kühl- und Trenneinrichtung mit einem aus einer Kaltgas-Austrittsdüse austretenden Strom eines Kaltgases durchmischt und dabei unterkühlt wird und anschließend die Kohlendioxidteilchen von dem gasförmigem Gemisch aus Kohlendioxidgas und Kaltgas zumindest teilweise getrennt werden, und der unterkühlte Kohlendioxidschnee zur Kühlung einer Produktoberfläche eingesetzt wird. In der Kühl- und Trenneinrichtung (ein Zyklon) erfolgt aufgrund der innigen Durchmischung des Gemisches aus Kohlendioxidgas und Kohledioxidschnee mit dem Kaltgas somit zum einen eine wirksame Unterkühlung der Trockeneisteilchen, zum anderen eine zumindest weitgehende Trennung der unterkühlten Trockeneisteilchen vom Gasstrom.

Erfindungsgemäß wird das Kohlendioxid also nach dem Entspannungsvorgang, d.h. nach der beim Austritt aus der Entspannungsdüse erfolgenden Umwandlung des flüssigen Kohlendioxids in ein Gemisch aus Kohlendioxidschnee und Kohlendioxidgas, mit einem Kaltgasstrom durchmischt. Die Temperatur des Kaltgasstroms liegt dabei deutlich unter der Sublimationstemperatur des festen Kohlendioxidschnees (-78,9°C bzw. 194 K); beispielsweise beträgt die Temperatur des Kaltgasstroms weniger als -100°C (173 K), bevorzugt weniger als -150°C (123 K). Bei der Durchmischung wird der Kohlendioxidschnee daher auf einen Temperaturwert gekühlt, der deutlich unter seiner Sublimationstemperatur liegt (Unterkühlung). Der auf diese Weise beispielsweise auf einen Temperaturwert von etwa -100°C (173 K) unterkühlte Kohlendioxidschnee eignet sich besonders zur Kühlung von Produktoberflächen, da der oben erwähnte Leidenfrosteffekt nicht oder erst mit deutlicher Verzögerung auftritt und somit die Effizienz des Kühlvorgangs gegenüber bisher üblichen Verfahren zur Kühlung mit Kohlendioxidschnee gesteigert wird.

Bevorzugt wird der zur Kühlung des Stroms aus Kohlendioxidschnee und Kohlendioxidgas vorgesehene Kaltgasstrom zur Vorkühlung des flüssigen Kohlendioxids vor dessen Zuführung an die Kohlendioxid-Entspannungsdüse eingesetzt. In diesem Falle wird bereits das zugeführte flüssige Kohlendioxid auf einen Temperaturwert deutlich unterhalb der Umgebungstemperatur, beispielsweise auf einen Temperaturwert zwischen -25°C und 0°C (248 K bis 273 K) gekühlt. Dadurch wird der Anteil an festem Kohlendioxid gegenüber dem Anteil von Kohlendioxidgas nach der Entspannung erhöht.

Eine vorteilhafte Weiterbildung der Erfindung sieht vor, dass ein Teilstrom des zur Kühlung des Stroms aus Kohlendioxidschnee und Kohlendioxidgas eingesetzten Kaltgasstroms rezykliert und vor oder nach der Kühlung durch den Kaltgasstrom zur Kühlung des aus der Entspannungsdüse austretenden Stroms aus Kohlendioxidschnee und Kohlendioxidgas eingesetzt wird. Bei dieser Ausführungsform der Erfindung wird also zumindest ein Teil des zum Kühlen des Kohlendioxids eingesetzten Kaltgases zurückgeführt und zusätzlich zu dem frisch zugeführten Kaltgas und unter Ausnutzung der noch im rezyklierten Kaltgas enthaltenen Restkälte erneut zum Kühlen des Kohlendioxids verwendet. Auf diese Weise kann die Menge an zur Kühlung des Kohlendioxids eingesetztem Kaltgas insgesamt reduziert werden. Beispielsweise wird der Teilstrom des rezyklierten Gases in den Kaltgasstrom vor dessen Zuführung an die Kühl- und Trenneinrichtung eingeleitet, oder der Teilstrom des rezyklierten Gases wird direkt der Kühl- und Trenneinrichtung, beispielsweise über eine separate Düse, zugeführt. Handelt es sich bei der Kühl- und Trenneinrichtung um einen Zyklon, kann der Teilstrom des rezyklierten Gases an einer Düse direkt in den Zyklon eingespeist werden oder an einer Zweistoffdüse zugleich mit dem Kaltgas oder an einer Dreistoffdüse gleichzeitig mit dem flüssigen Kohlendioxid und dem Kaltgas dem Zyklon zugeführt werden.

Beim Kaltgasstrom handelt es sich bevorzugt um ein kaltes kryogenes Gas, beispielsweise Stickstoff, Sauerstoff, Argon, oder Helium, das dem Strom aus Kohlendioxidschnee und Kohlendioxidgas im gasförmigen oder verflüssigten Zustand zugeführt wird; der Begriff "Kaltgas" soll im Rahmen der Erfindung somit auch ein verflüssigtes kryogenes Gas einschließen. Um eine effiziente Kühlung des Kohlendioxids zu bewirken, weist der Stickstoff unmittelbar vor dem Kontakt mit dem Strom aus Kohlendioxidschnee und Kohlendioxidgas eine Temperatur von unter minus 100°C (173 K), bevorzugt von unter minus 150°C (123 K), auf, oder, bei Zuführung im flüssigen Zustand, von minus 196°C (77 K) (bei 1 bar Umgebungsdruck). Alternativen zu Stickstoff als Kaltgas sind beispielsweise Sauerstoff (Siedetemperatur -183°C [90 K]) oder ein Edelgas wie Argon (Siedetemperatur -186°C [87 K]), die ebenfalls bevorzugt bei Temperaturen unter - 100°C (173 K) bzw. -150°C (127 K) oder im flüssigen Zustand mit ihren Siedetemperaturen mit dem Strom aus Kohlendioxidschnee und Kohlendioxidgas in Kontakt gebracht werden. Soweit es sich beim Kaltgas um ein verflüssigtes Gas handelt, beispielsweise flüssiger Stickstoff oder flüssiges Argon, verdampft dieses beim Kontakt mit dem Strom aus Kohlendioxidgas und Kohlendioxidschnee, wobei es die dabei erforderliche Wärme dem Kohlendioxid entzieht.

Die Aufgabe der Erfindung wird auch mit einer Vorrichtung zum Kühlen von Produkten mit Kohlendioxidschnee gelöst, die mit einer an einer Druckleitung für flüssiges Kohlendioxid angeschlossenen Kohlendioxid-Entspannungsdüse zum Erzeugen eines Stroms von Kohlendioxidschnee und Kohlendioxidgas und mit einer an eine Zuleitung für einen Kaltgasstrom angeschlossenen Kaltgas-Austrittsdüse ausgerüstet ist, wobei die Kohlendioxid-Entspannungsdüse und die Kaltgas-Austrittsdüse in einer Kühl- und Trenneinrichtung einmünden, in der die erzeugten Kohlendioxidschneeteilchen unterkühlt und anschließend zumindest teilweise vom erzeugten Gasgemisch aus Kohlendioxidgas und Kaltgas getrennt werden und als Kühl- und Trenneinrichtung ein Zyklon zum Einsatz kommt.

Erfindungsgemäß wird der Kaltgasstrom also dem in der Entspannungsdüse erzeugten Strom aus Kohlendioxidschnee und Kohlendioxidgas zugeführt und mit diesem vermischt, wobei die erzeugten Kohlendioxidpartikel unterkühlt werden. Anschließend werden die Kohlendioxidpartikel vom Gemisch aus Kaltgas und Kohlendioxidgas zumindest weitgehend getrennt. Die Kohlendioxidpartikel werden anschließend mitteln einer entsprechenden Zuführeinrichtung dem Produkt zwecks Kühlung zugeführt.

Im Zyklon (Fliehkraftabscheider), der also Kühl- und Trenneinrichtung zum Einsatz kommt, zum einen eine innige Durchmischung des Gemisches aus Kohlendioxidschnee und Kohlendioxidgas einerseits und von Kaltgas andererseits erfolgt und gleichzeitig eine effektive Trennung des Feststoffanteils (Kohlendioxidpartikel) vom Gasanteil (Gemisch aus Kaltgas und gasförmigem Kohlendioxid) bewirkt wird.

Für den Eintritt des Kohlendioxids bzw. des Kaltgases in den Zyklon bestehen mehrere vorteilhafte Alternativen. Zum einen können die Kohlendioxid-Entspannungsdüse und die Kaltgas-Austrittsdüse an einer Zweistoffdüse derart angeordnet sind, dass die ihnen entweichenden Ströme im Wesentlichen parallel zueinander in den Zyklon einmünden. Zum anderen können die Kohlendioxid-Entspannungsdüse und die Kaltgas-Austrittsdüse an winklig voneinander getrennten Zuführungsstellen in den Zyklon einmünden, wobei die Zuführungsstellen voneinander einen Winkelabstand zwischen 10° und 180°, bevorzugt zwischen 90° und 180° aufweisen, jedoch derart angeordnet sind, dass die beiden Ströme innerhalb Zyklon im gleichen Umlaufsinn verlaufen. In beiden Fällen wird eine effiziente Unterkühlung der Kohlendioxidpartikel bewirkt. Im Falle der Rezyklierung eines Teilstroms des im Zyklon von den Kohlendioxidpartikeln abgetrennten Gasstroms kann der rezyklierte Teilstrom beispielsweise an einer separaten Düse tangential (und gleichsinnig zu den übrigen Strömen) in den Zyklon eingedüst oder an einer Zweistoffdüse oder Dreistoffdüse gemeinsam mit dem Kaltgas bzw. dem Kaltgas und dem Kohlendioxid in den Zyklon eingespeist werden.

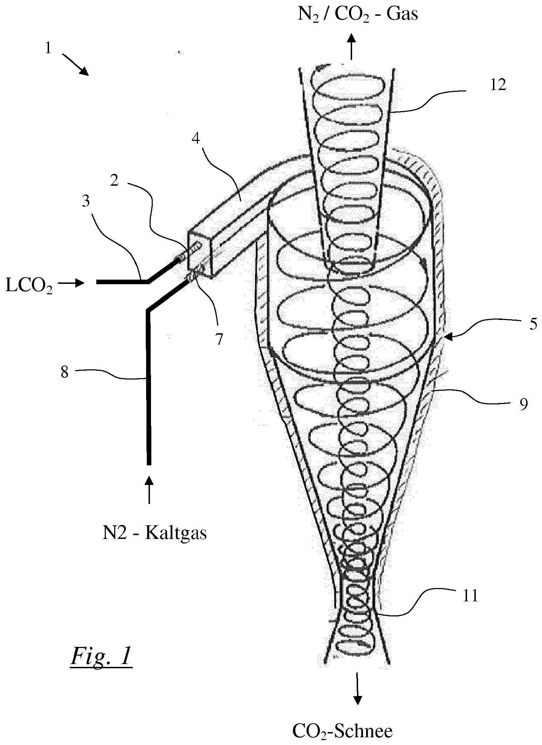

Anhand der Zeichnung soll ein Ausführungsbeispiel der Erfindung näher erläutert werden. Die einzige Zeichnung (Fig. 1) zeigt schematisch eine erfindungsgemäße Vorrichtung in einer teilweise aufgeschnittenen Schrägansicht.

Die in Fig. 1 gezeigte Vorrichtung 1 umfasst eine Entspannungsdüse 2 für Kohlendioxid, die an eine Druckleitung 3 zum Transportieren von druckverflüssigtem Kohlendioxid angeschlossen ist. Die Druckleitung 3 ist in hier nicht gezeigter Weise mit einem Tank für flüssiges Kohlendioxid verbunden. Die Entspannungsdüse mündet in eine tangentiale Zuführung 4 eines Zyklons 5 ein, der in der unten näher beschriebenen Weise zur zumindest teilweisen Trennung der bei der Entspannung des flüssigen Kohlendioxids an der Entspannungsdüse 2 entstehenden Kohlendioxidpartikel vom entstehenden Kohlendioxidgas dient.

Beabstandet von der Entspannungsdüse 2 mündet in die Zuführung 4 des Zyklons 5 eine Austrittsdüse 7 für ein Kaltgas ein, die an eine thermisch isolierte Kaltgaszuleitung 8 angeschlossen ist. Beim Kaltgas handelt es sich beispielsweise um kalten gasförmigen Stickstoff, der (hier nicht gezeigt) im flüssigen Zustand in einem Tank bevorratet wird und nach Durchlaufen eines Verdampfers, beispielsweise eines hier nicht gezeigten Wärmetauschers zum Unterkühlen des flüssigen CO₂ in der Zuleitung 3, der Austrittsdüse 7 mit einer Temperatur von unter minus 150°C (123 K) zugeführt wird. Alternativ kann auch flüssiger Stickstoff mit einer Temperatur von minus 196°C, (77 K) (1bar) oder ein anderes kryogenes Gas im gasförmigen oder verflüssigten Zustand als Kaltgas zum Einsatz kommen. Der mit thermisch isolierten Wänden 9 ausgerüstete Zyklon 5 besitzt des weiteren in an sich bekannter Weise einen (geodätisch) nach unten gerichteten Produktaustritt 11 und einen mit dem Innern des Zyklons 5 im Bereich von dessen Achse strömungsverbundenen Gasaustritt 12. Entspannungsdüse 2 und Austrittsdüse 7 können im Übrigen auch Ausmündungen einer außenmischenden Zweistoffdüse darstellen.

Beim Betrieb der Vorrichtung 1 strömt flüssiges Kohlendioxid unter einem Druck von mehr als 5,18 bar abs., beispielsweise einem Druck zwischen 10 bis 30 bar, durch die Druckleitung 3 und entspannt an der Entspannungsdüse 2 unter Bildung eines Gemisches aus Kohlendioxidgas und Kohlendioxidschnee, wobei es sich auf eine Temperatur von -78,9°C (194 K) abkühlt. Das Gemisch aus Kohlendioxidgas und Kohlendioxidschnee strömt über die Zuführung 4 in den Zyklon 5 ein. Zugleich wird ein kaltes kryogenes Gas, beispielsweise kalter gasförmiger Stickstoff, über die Kaltgaszuleitung 8 herangeführt und strömt an der Austrittsdüse 7 ebenfalls in die Zuführung 4 und von dort in den Zyklon 5. Entspannungsdüse 2 und Austrittsdüse 7 sind so angeordnet, dass die ihnen jeweils entweichenden Ströme im Wesentlichen parallel durch die Zuführung 4 strömen. Im Innern des Zyklons 5 kommt es aufgrund der dort vorherrschenden Strömungen zu einer innigen Vermischung von Kohlendioxidgas und Kohlendioxidpartikeln einerseits und Kaltgas andererseits. Aufgrund der tieferen Temperatur des Kaltgases werden die Kohlendioxidpartikel dabei auf eine Temperatur deutlich unterhalb der Sublimationstemperatur von Kohlendioxid bei Atmosphärendruck abgekühlt (unterkühlt), beispielsweise auf eine Temperatur von ca. -100°C (173 K). Durch die kreisförmigen Strömungen werden die Kohlendioxidpartikel aufgrund der Fliehkraft an die Kegelwände geschleudert und soweit abgebremst, dass sie sich aus der Strömung lösen und nach unten in Richtung des Produktaustritts 11 rieseln. Von dort werden sie beispielsweise auf die Oberfläche eines zu kühlenden Gegenstandes aufgetragen. Aufgrund der Unterkühlung der Kohlendioxidpartikel sublimiert das Kohlendioxid nicht unmittelbar beim Auftreffen auf den zu kühlenden Gegenstand, da ein Teil der dem Gegenstand entzogenen Wärme zur Aufwärmung der Kohlendioxidpartikel bis zum Erreichen der Sublimationstemperatur aufgewandt werden muss.

Das am Gasaustritt 12 entweichende kalte, überwiegend aus gasförmigem Stickstoff und gasförmigem Kohlendioxid bestehende Gas wird bevorzugt aufgefangen und beispielsweise zur Vorkühlung des flüssigen Kohlendioxids in der Druckleitung 3 eingesetzt. Alternativ kann zumindest ein Teilstrom des aus dem Gasaustritt 12 entweichenden Gasgemisches rückgeführt und in die Kaltgaszuleitung 8, die Zuführung 4 des Zyklons 5 und/oder in direkt in den Zyklon 5 eingeleitet werden, um die Restkälte des Gasgemisches zur Unterkühlung der Kohlendioxidpartikel zu nutzen.

Weiterhin kann der Produktaustritt 11 in einem hier gleichfalls nicht gezeigten Schneehorn integriert sein, dass im weiteren Verfahrensablauf beispielsweise für eine flächige Verteilung der aus dem Produktaustritt 11 austretenden unterkühlten Kohlendioxidpartikel auf die zu kühlende Oberfläche sorgt.

### Bezugszeichenliste

- 1.: Vorrichtung
- 2.: Entspannungsdüse
- 3.: Druckzuleitung
- 4.: Zuführung
- 5.: Zyklon
- 6.: -
- 7.: Austrittsdüse (für Kaltgas)
- 8.: Kaltgaszuleitung
- 9.: thermisch isolierte Wände (des Zyklons)
- 10.: -
- 11.: Produktaustritt
- 12.: Gasaustritt

## Patentansprüche

1. Verfahren zum Kühlen von Produkten, bei dem unter Druck herangeführtes flüssiges Kohlendioxid an einer Kohlendioxid-Entspannungsdüse (2) zu Kohlendioxidgas und Kohledioxidschnee entspannt wird und der Kohlendioxidschnee zum Kühlen eines Produkts eingesetzt wird,
**dadurch gekennzeichnet,**
**dass** der aus der Kohlendioxid-Entspannungsdüse (2) austretende Strom aus Kohlendioxidschnee und Kohlendioxidgas in einer Kühl- und Trenneinrichtung (5) mit einem aus einer Kaltgas-Austrittsdüse (7) austretenden Strom eines Kaltgases durchmischt und unterkühlt wird, und anschließend die Kohlendioxidteilchen von dem gasförmigem Gemisch aus Kohlendioxidgas und Kaltgas zumindest teilweise getrennt werden, und der unterkühlte Kohlendioxidschnee zur Kühlung einer Produktoberfläche eingesetzt wird.

2. Verfahren nach Anspruch 1, **dadurch gekennzeichnet, dass** der Kaltgasstrom vor der Zuführung zur Kühl- und Trenneinrichtung (5) zur Vorkühlung des flüssigen Kohlendioxids vor der Zuführung an die Kohlendioxid-Entspannungsdüse (2) eingesetzt wird.

3. Verfahren nach Anspruch 1 oder 2, **dadurch gekennzeichnet, dass** ein Teilstrom des aus der Kühl- und Trenneinrichtung (5) entnommenen gasförmigen Gemischs aus Kohlendioxidgas und Kaltgas rezirkuliert und der Kühl- und Trenneinrichtung (5) zugeführt wird.

4. Verfahren nach einem der vorhergehenden Ansprüche, **dadurch gekennzeichnet, dass** es sich beim Kaltgasstrom um ein kaltes kryogenes Gas handelt, beispielsweise Stickstoff, Sauerstoff oder Argon, welches im gasförmigen oder verflüssigten Zustand vorliegt und vor dem Kontakt mit dem Strom aus Kohlendioxidschnee und Kohlendioxidgas eine Temperatur von unter minus 100°C (173 K), bevorzugt von unter minus150°C (123 K) aufweist.

5. Vorrichtung zum Kühlen von Produkten mit Kohlendioxidschnee, mit einer an einer Druckleitung (3) für flüssiges Kohlendioxid angeschlossenen Kohlendioxid-Entspannungsdüse (2) zum Erzeugen eines Stroms von Kohlendioxidschnee und Kohlendioxidgas und mit einer an eine Zuleitung (8) für einen Kaltgasstrom angeschlossenen Kaltgas-Austrittsdüse (7), wobei die Kohlendioxid-Entspannungsdüse (2) und die Kaltgas-Austrittsdüse (7) in eine Kühl- und Trenneinrichtung (5) einmünden, in der die erzeugten Kohlendioxidschneeteilchen unterkühlt und anschließend zumindest teilweise vom erzeugten Gasgemisch aus Kohlendioxidgas und Kaltgas getrennt werden und als Kühl- und Trenneinrichtung ein Zyklon (5) zum Einsatz kommt.

6. Vorrichtung nach Anspruch 5, **dadurch gekennzeichnet, dass** die Kohlendioxid-Entspannungsdüse (2) und die Kaltgas-Austrittsdüse (7) an einer Zweistoffdüse derart angeordnet sind, dass die ihnen entweichenden Ströme im Wesentlichen parallel zueinander in den Zyklon (5) einmünden.

7. Vorrichtung nach Anspruch 5, **dadurch gekennzeichnet, dass** die Kohlendioxid-Entspannungsdüse (2) und die Kaltgas-Austrittsdüse (7) an winklig voneinander getrennten Zuführungsstellen in den Zyklon (5) einmünden, wobei die Zuführungsstellen einen Winkelabstand von zwischen 10° und 180°, bevorzugt zwischen 90° und 180° aufweisen.

## Claims

1. Method for cooling products, in which liquid carbon dioxide supplied under pressure is depressurized at a carbon dioxide depressurization nozzle (2) to give carbon dioxide gas and carbon dioxide snow and the carbon dioxide snow is used for cooling a product, **characterized in that** the stream of carbon dioxide snow and carbon dioxide gas exiting from the carbon dioxide depressurization nozzle (2) is mixed with a stream of cold gas exiting from a cold gas exit nozzle (7) in a cooling and separation device (5) and supercooled and the carbon dioxide particles are subsequently at least partially separated from the gaseous mixture of carbon dioxide and cold gas and the supercooled carbon dioxide snow is used for cooling a product surface.

2. Method according to Claim 1, **characterized in that** the cold gas stream is, before being fed to the cooling and separation device (5), used for precooling the liquid carbon dioxide before feeding to the carbon dioxide depressurization nozzle (2).

3. Method according to Claim 1 or 2, **characterized in that** a substream of the gaseous mixture of carbon dioxide gas and cold gas taken off from the cooling and separation device (5) is recirculated and fed to the cooling and separation device (5).

4. Method according to any of the preceding claims, **characterized in that** the cold gas stream is a cold cryogenic gas, for example nitrogen, oxygen or argon, which is present in the gaseous or liquefied state and before contact with the stream of carbon dioxide snow and carbon dioxide gas has a temperature below minus 100°C (173 K), preferably below minus 150°C (123 K).

5. Apparatus for cooling products with carbon dioxide snow, having a carbon dioxide depressurization nozzle (2) connected to a pressure conduit (3) for liquid carbon dioxide for producing a stream of carbon dioxide snow and carbon dioxide gas and having a cold gas exit nozzle (7) connected to a feed conduit (8) for a cold gas stream, wherein the carbon dioxide depressurization nozzle (2) and the cold gas exit nozzle (7) open into a cooling and separation device (5) in which the carbon dioxide snow particles produced are supercooled and subsequently at least partially separated from the gas mixture of carbon dioxide gas and cold gas produced and a cyclone (5) is used as cooling and separation device.

6. Apparatus according to Claim 5, **characterized in that** the carbon dioxide depressurization nozzle (2) and the cold gas exit nozzle (7) are arranged on a two-fluid nozzle in such a way that the streams leaving it enter the cyclone (5) essentially parallel to one another.

7. Apparatus according to Claim 5, **characterized in that** the carbon dioxide depressurization nozzle (2) and the cold gas exit nozzle (7) open into the cyclone (5) at feed points separated by an angle from one another, where the feed points have an angular spacing of from 10° to 180°, preferably from 90° to 180°.

## Revendications

1. Procédé pour le refroidissement de produits, selon lequel du dioxyde de carbone liquide acheminé sous pression est détendu au niveau d'une buse de détente de dioxyde de carbone (2) en dioxyde de carbone gazeux et neige carbonique, et la neige carbonique est utilisée pour le refroidissement d'un produit,
**caractérisé en ce que**
le courant de neige carbonique et de dioxyde de carbone gazeux sortant de la buse de détente de dioxyde de carbone (2) est mélangé et sous-refroidi dans un dispositif de refroidissement et de séparation (5) avec un courant d'un gaz froid sortant d'une buse de sortie de gaz froid (7), puis les particules de dioxyde de carbone sont au moins partiellement séparées du mélange gazeux de dioxyde de carbone gazeux et de gaz froid, et la neige carbonique sous-refroidie est utilisée pour le refroidissement d'une surface de produit.

2. Procédé selon la revendication 1, **caractérisé en ce que** le courant de gaz froid est utilisé avant l'introduction dans le dispositif de refroidissement et de séparation (5) pour le pré-refroidissement du dioxyde de carbone liquide avant l'introduction au niveau de la buse de détente de dioxyde de carbone (2).

3. Procédé selon la revendication 1 ou 2, **caractérisé en ce qu'**un courant partiel du mélange gazeux de dioxyde de carbone gazeux et de gaz froid soutiré du dispositif de refroidissement et de séparation (5) est recirculé et introduit dans le dispositif de refroidissement et de séparation (5).

4. Procédé selon l'une quelconque des revendications précédentes, **caractérisé en ce que** le courant de gaz froid consiste en un gaz cryogène froid, par exemple de l'azote, de l'oxygène ou de l'argon, qui se présente à l'état gazeux ou liquéfié, et présente avant le contact avec le courant de neige carbonique et de dioxyde de carbone gazeux une température inférieure à moins 100 °C (173 K), de préférence inférieure à moins 150 °C (123 K).

5. Dispositif pour le refroidissement de produits avec de la neige carbonique, comprenant une buse de détente de dioxyde de carbone (2) raccordée à une conduite sous pression (3) pour du dioxyde de carbone liquide, pour la génération d'un courant de neige carbonique et de dioxyde de carbone gazeux, et comprenant une buse de sortie de gaz froid (7) raccordée à une conduite d'alimentation (8) pour un courant de gaz froid, la buse de détente de dioxyde de carbone (2) et la buse de sortie de gaz froid (7) débouchant dans un dispositif de refroidissement et de séparation (5), dans lequel les particules de neige carbonique générées sont sous-refroidies, puis au moins partiellement séparées du mélange gazeux généré de dioxyde de carbone gazeux et de gaz froid, et un cyclone (5) est utilisé en tant que dispositif de refroidissement et de séparation.

6. Dispositif selon la revendication 5, **caractérisé en ce que** la buse de détente de dioxyde de carbone (2) et la buse de sortie de gaz froid (7) sont agencées au niveau d'une buse à deux substances de telle sorte que les courants qui en sortent débouchent essentiellement en parallèle l'un de l'autre dans le cyclone (5).

7. Dispositif selon la revendication 5, **caractérisé en ce que** la buse de détente de dioxyde de carbone (2) et la buse de sortie de gaz froid (7) débouchent à des emplacements d'introduction séparés l'un de l'autre par des angles dans le cyclone (5), les emplacements d'introduction présentant un écart angulaire compris entre 10° et 180°, de préférence entre 90° et 180°.
